(19) Europäisches Patentamt
European Patent Office
Office européen des brevets

(11) **EP 1 180 669 B1**

(12) **EUROPÄISCHE PATENTSCHRIFT**

(45) Veröffentlichungstag und Bekanntmachung des Hinweises auf die Patenterteilung:
**14.05.2003 Patentblatt 2003/20**

(51) Int Cl.$^7$: **G01J 5/10**, G01J 5/04, G01J 5/52

(21) Anmeldenummer: **01118679.8**

(22) Anmeldetag: **03.08.2001**

(54) **Messanordnung zur pyrometrischen Temperaturbestimmung eines Garbehälters**

Pyrometric measurement device of the temperature of a cooking vessel

Dispositif de mesure pyrometrique de la température d'un récipient de cuisson

(84) Benannte Vertragsstaaten:
**AT BE CH CY DE DK ES FI FR GB GR IE IT LI LU MC NL PT SE TR**

(30) Priorität: **06.08.2000 US 634440**

(43) Veröffentlichungstag der Anmeldung:
**20.02.2002 Patentblatt 2002/08**

(73) Patentinhaber: **Miele & Cie. GmbH & Co.**
**D-33332 Gütersloh (DE)**

(72) Erfinder: **Stein, Alex, Dr.**
**Secaucus, New Jersey 07094 (US)**

(56) Entgegenhaltungen:
**GB-A- 2 072 334        US-A- 2 837 917**
**US-A- 3 796 099**

EP 1 180 669 B1

**Beschreibung**

Die Erfindung betrifft eine Messanordnung zur pyrometrischen Temperaturbestimmung eines Garbehälters, der mit seiner Bodenfläche auf einer ebenen Kochfeldplatte in einer Kochzone aufliegt und dessen Wärmestrahlung mit einem Detektor sensiert wird.

Eine derartige Messanordnung nutzt den physikalischen Effekt, dass Körper oberhalb der Temperatur von 0 K eine Wärmeenergie abstrahlen, um die Temperatur des strahlenden Körpers berührungslos zu ermitteln. Dabei kann von der emittierten Wärmeenergie bzw. Wärmestrahlung auf die Temperatur des Körpers geschlossen werden, wenn der Emissionsgrad des Körpers bekannt ist. Der Emissionsgrad hängt hauptsächlich von der Farbe und der Oberflächenbeschaffenheit des Körpers ab.

Die DE 33 41 234 C1 beschreibt eine Messanordnung bei der der Emissionsgrad eines Wärme abstrahlenden Messobjekts, hier ein Garbehälter, bekannt ist. Um die Temperatur des Garbehälters zu bestimmen, wird vorgeschlagen, den Garbehälter mit einer Abstrahlfläche, deren Emissionsgrad bekannt ist, auszustatten. Die Abstrahlfläche verläuft rings um den Garbehälter und ist dunkelmatt, insbesondere schwarz ausgelegt, um eine möglichst hohe Intensität der Wärmestrahlung zu erhalten. Aufgrund des bekannten Emissionsgrades der Abstrahlfläche wird aus einer mit einem Detektor gemessenen Strahlungsintensität die Temperatur des Garbehälters bestimmt. Diese Art der Temperaturmessung liefert nur verlässliche Temperatur-Werte, wenn die Abstrahlfläche des Garbehälters auf den Detektor abgestimmt ist. Werden herkömmliche Garbehälter verwendet, die nicht zusätzlich mit auf den Detektor abgestimmten Abstrahlflächen ausgestattet sind, so ist die Temperaturmessung fehlerbehaftet. Weiter verschlechtern Verschmutzungen auf der Abstrahlfläche und/oder am Detektor die Genauigkeit der Messungen.

Ferner ist aus der US 3 916 690 eine Messanordnung bekannt, mit der materialunabhängig die Temperatur einer Oberfläche eines Messobjekts bestimmt werden kann. Hierzu ist auf das Messobjekt als kompensierender Strahler ein beheizter Körper mit einer halbkugelförmigen Aushöhlung, dessen Halbkugelfläche schwarz gefärbt ist, aufgesetzt. Im Hohlraum zwischen Messobjekt und Strahler ist ein drehbares, einseitig zum kompensierenden Strahler verspiegeltes Flügelrad angeordnet, das bei seiner Drehung in den Zeitintervallen des Durchlassens der Strahlung vom Messobjekt durch die Flügelrad-Zwischenräume diese Strahlung auf ihrem weiteren Weg mit einem Infrarot-Detektor misst. Während der Zeiträume der Abdeckung der besagten Strahlung durch einen Flügel des Flügelrades wird die vom kompensierenden Strahler emittierte Strahlung über die verspiegelte Fläche des Flügels reflektiert und dem Infrarot-Detektor zugeführt. Der kompensierende Strahler wird solange aufgeheizt oder gekühlt, bis seine Strahlung der des Messobjekts entspricht. Bei Erreichen dieses als Strahlungsgleichgewicht bezeichneten Zustands wird dann die Temperatur des Strahlers mit einem Kontaktthermometer gemessen. Sie entspricht beim Strahlungsgleichgewicht der des Messobjekts. Die oben vorgestellte Messanordnung ist konstruktiv kompliziert und die apparative Ausstattung verursacht hohe Kosten, so dass sie für Haushaltsgeräte nicht geeignet scheint.

Der Erfindung stellt sich somit das Problem, eine Messanordnung der eingangs erwähnten Art zu offenbaren, die mit einfachen Mitteln die Temperatur eines Garbehälters exakt bestimmt.

Erfindungsgemäß wird dieses Problem durch eine Messanordnung mit den Merkmalen des Patentanspruchs 1 gelöst. Vorteilhafte Ausgestaltungen und Weiterbildungen der Erfindung ergeben sich aus den nachfolgenden Unteransprüchen.

Die erfindungsgemäße Anordnung von zwei Mess-Stellen ermöglicht über die Auswertung der hier anfallenden Wärmestrahlung die Ermittlung des Emissionsgrades von der Garbehälter-Bodenfläche. Hierdurch ergibt sich der Vorteil, dass der Einfluss des Emissionsgrades bei der Temperaturberechnung berücksichtig wird, so dass die Temperatur unabhängig von der Oberflächenbeschaffenheit des Garbehälter-Bodens präzise bestimmt wird. Weiter gilt als großer Vorteil, dass keine zu bewegenden Bauteile benutzt werden, so dass einerseits die Kosten für die Messanordnung gering bleiben. Anderseits wird hierdurch eine Langlebigkeit der Messanordnung erzielt. In vorteilhaften Ausführungsformen der Erfindung werden nur die Wärmestrahlungen ausgewertet, die im undurchlässigen Wellenbereich der Kochfeldplatte liegen. Durch diese Begrenzung wird sichergestellt, dass keine Störstrahlung die zu berechnenden Temperatur-Werte verfälscht. In weiteren Ausführungsformen wird die Messanordnung vor hohen Temperaturen durch ein Schutzschild geschützt, welches hochreflektierend und/oder einen geringen Wärmeleitfähigkeitskoeffizienten besitzt. Zusätzlich wird noch Wärme vom Körper und von den Infrarot-Leitungen mit einem Wärmeleiter zu einer Wärmesenke abgeführt. Durch die genannten Vorkehrungen bleibt die Messanordnung außerhalb des Hohlraums kühl, so dass sie selbst keine Wärmestrahlung emittiert. Dadurch kann sogar bei hohen Temperaturen in der Umgebung der Messanordnung die Temperatur der Garbehälter-Bodenfläche exakt bestimmt werden.

Ein Ausführungsbeispiel der Erfindung ist in den Zeichnungen rein schematisch dargestellt und wird nachfolgend näher beschrieben. Es zeigt

Figur 1A      eine schematische Darstellung einer Messanordnung im Schnitt;
Figur 1B      eine zu Figur 1A modifizierte Messanordnung im Schnitt;
Figur 2        eine Messkurve, die die Abhängigkeit der Signale (V1, V2) vom Emissionsgrad darlegt und

Figur 3    eine Messkurve, die den Transmissionsgrad einer Kochplatte in Abhängigkeit der Wellenlänge darstellt.

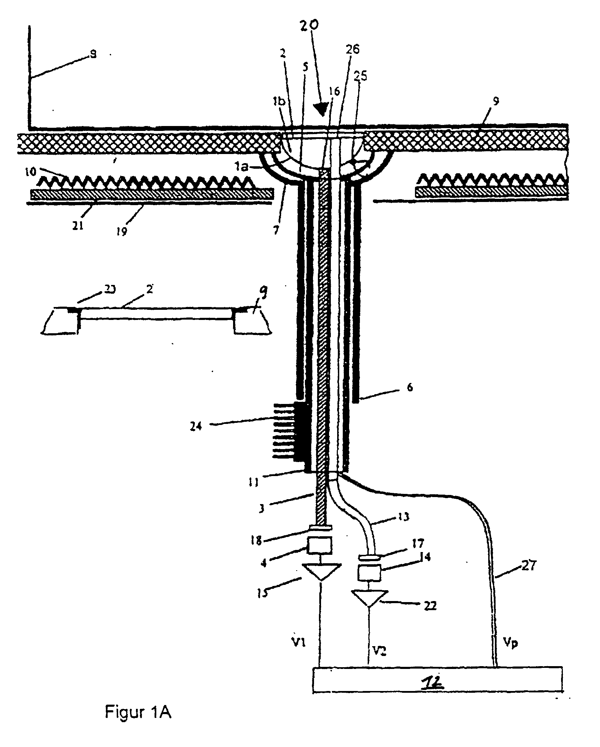

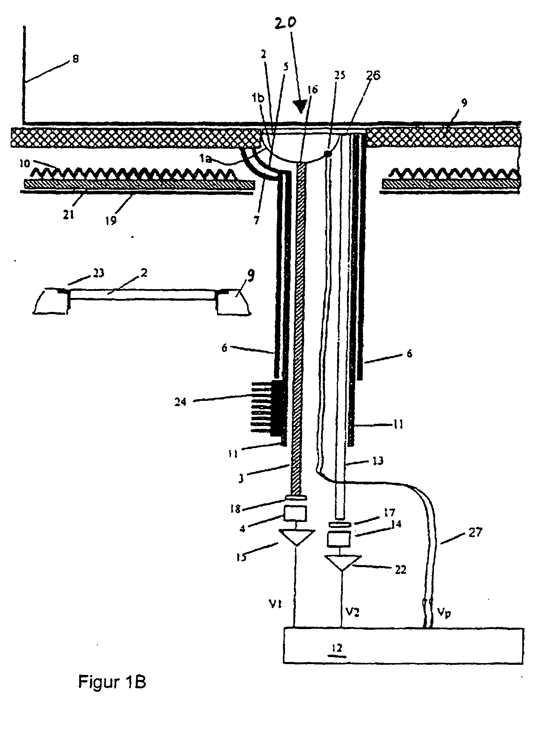

Figur 1 zeigt eine Messanordnung zur pyrometrischen Temperaturbestimmung von einem Garbehälter (8), der mit seiner Bodenfläche auf einer Kochzone eines Kochfeldes (nicht komplett dargestellt) aufliegt. Als Kochzone ist der Bereich des Kochfeldes bezeichnet, in dem der Garbehälter erhitzt wird. Der Begriff Garbehälter (8) ist hier stellvertretend für alle Behälter verwendet, in denen Speisen oder Flüssigkeiten erwärmt werden. Das Kochfeld ist in einem Metall-Rahmen (19) eingelassen. Es besteht im Wesentlichen aus einer ebenen Kochfeldplatte (9), elektrischen Heizwendeln (19) und einer thermischen Isolationsschicht (21). Die Heizwendeln (19) sind unterhalb der Kochfeldplatte (9) angeordnet und bringen die Kochfeldplatte (9) auf die vom Benutzer eingestellte Temperatur. Um die Heizenergie möglichst verlustfrei über die Kochzone auf den Garbehälter (8) zu bringen, ist unterhalb der Heizwendel (19) die thermische Isolationsschicht (21) angeordnet.

Die Messanordnung zur pyrometrischen Temperaturbestimmung des Garbehälters ist unterhalb der Garbehälter-Bodenfläche angeordnet.

Zur Aufnahme eines Fensters (2) weist die Kochfeldplatte (9) im Zentrum der Kochzone eine Öffnung (20) auf. Das Fenster (2) dient lediglich zum Schutz für die darunter liegenden Bauteile der Messanordnung bspw. vor Schmutz, Feuchtigkeit oder überkochenden Speisen. Um möglichst die gesamte Wärmestrahlung der Garbehälter-Bodenfläche durchlassen, ist es aus Zink-Sulfat oder Sapphir gefertigt. Das rund ausgeführte Fenster (2) ist im Durchmesser wesentlich kleiner als ein herkömmlicher Garbehälter-Boden und wird von diesem verdeckt. Um mögliche Fertigungs-Toleranzen der Kochfeldplatte (9) und/oder des Fensters (2) auszugleichen ist das Fenster (2) über einen Passring (23) in das Kochfeld eingelassen. An der unteren Seite des Fensters (2) liegt ein Körper (1a) mit einer halbkugelförmigen Aushöhlung bzw. Innenfläche derart an, dass ein näherungsweise geschlossener halbkugelförmiger Hohlraum (1b) zwischen dem Fenster (2) und dem Körper (1a) entsteht. Dabei besitzt die halbkugelförmige Innenfläche einen Reflexiongrad im infraroten Wellenbereich nahe eins, wobei jedoch eine Mess-Stelle (16) im unteren Bereich zur Bestimmung der Strahlungsintensität infrarot-durchlässig ausgestattet ist, was hier mit einer im Durchmesser kleinen Durchgangsbohrung verwirklicht worden ist. Bei der vorbeschriebenen Ausführung nimmt der Hohlraum (1b) die von der Garbehälter-Bodenfläche über das Fenster (2) emittierte Wärmestrahlung näherungsweise komplett auf. Sie kann nur durch die infrarot-durchlässige Mess-Stelle (16) austreten. Da ein absolut schwarzer Körper als Körper definiert ist, der die auf ihn fallende Wärmestrahlung aller Wellenlängen vollkommen absorbiert, kann der Hohlraum (1b) näherungsweise als schwarzer Körper angesehen werden. In diesem Zusammenhang gilt gemäß dem Kirchhoff'schen Strahlungsgesetz, dass ein Körper, der die größtmögliche Absorption besitzt, auch unter allen Körpern bei gleichen Bedingungen die größte Emission besitzt. Er wird somit auch als schwarzer Strahler in der Literatur bezeichnet. Durch die Ausführung des Hohlraums (1b) wird also erreicht, dass die Intensität der vom Hohlraum (1b) emittierten Wärmestrahlung an der Mess-Stelle (16) näherungsweise unabhängig von der Farbe und der Oberflächenbeschaffenheit der Garbehälter-Bodenfläche ist. Somit kann über die bekannte Planck'sche Strahlungsgleichung für einen schwarzen Strahler

$$M_{S,\lambda} = \frac{c_1}{\lambda^5 \cdot \left[ \exp(\frac{c_2}{\lambda \cdot T}) - 1 \right]} \qquad (1.)$$

mit

$M_{S,\lambda}$: Strahlungsintensität eines schwarzen Strahlers

$\lambda$: Wellenlänge        T: Temperatur

$c_{1..2}$: erste und zweite Plank'sche Strahlungskonstante

über die einfallende Wärmestrahlung an der Mess-Stelle (16) die Temperatur der Garbehälter-Bodenfläche berechnet werden. Eine reflektierende Innenfläche bietet dabei den Vorteil, dass sie annähernd zeitgleich die Temperatur der Garbehälter-Bodenfläche annimmt und somit sofort einen Strahlungsausgleich im Hohlraum (1b) herstellt.

Da der Hohlraum (1b) jedoch nicht die Strahlungseigenschaften eines absolut schwarzen Körpers (Strahlers) besitzt, weisen die über die Wärmestrahlungsintensität der Mess-Stelle (16) berechneten Temperaturen Abweichungen zu den tatsächlichen auf. Das Verhältnis der Wärmestrahlungsintensitäten vom Hohlraum (1b) zu einem absolut schwarzen Körper entspricht unter gleichen Bedingungen dem Emissionsgrad.

$$\varepsilon = \frac{M_\lambda}{M_{S.\lambda}} \qquad\qquad (2.)$$

mit       $\varepsilon$: Emissionsgrad       $M_\lambda$: Strahlungsintensität eines beliebigen Körpers

Ist der Emissionsgrad bekannt, kann mit Hilfe der Gleichungen (1.), (2.) die Temperatur der Garbehälter-Bodenfläche berechnet werden. Zur Ermittlung des Emissionsgrades ist in Ergänzung zu der Mess-Stelle (16) eine zweite Mess-Stelle (26) vorgesehen. Sie befindet sich innerhalb des Hohlraums (1b) auf der Unterseite des Fensters (2) und sensiert dort die einfallende Wärmestrahlung. An dieser Position ist die Wärmestrahlung nicht nur abhängig von der Temperatur der Garbehälter-Bodenfläche sondern auch von seiner Farbe und Oberflächenbeschaffenheit. Das heißt beispielsweise, dass zwei Garbehälter (8) mit unterschiedlich gefärbten Bodenflächen trotz gleicher Temperatur eine Wärmestrahlung mit unterschiedlicher Intensität emittieren. Die Messanordnung gemäß Fig. 1 B stellt eine Alternative zu der von Fig. 1A dar und unterscheidet sich im Wesentlichen durch die Anordnung ihrer zweiten Mess-Stelle (26). Nach Fig. 1B ragt das Fensters (2) über den Körper (1a) in einem Bereich hinaus. In diesem Bereich ist die zweite Mess-Stelle (26) angebracht. Hierdurch wird einerseits eine Störung der Reflektion im Hohlraum (1b) verhindert. Andererseits benötigt die Messanordnung mit den im nachfolgenden beschriebenen Bauteilen mehr Raum.

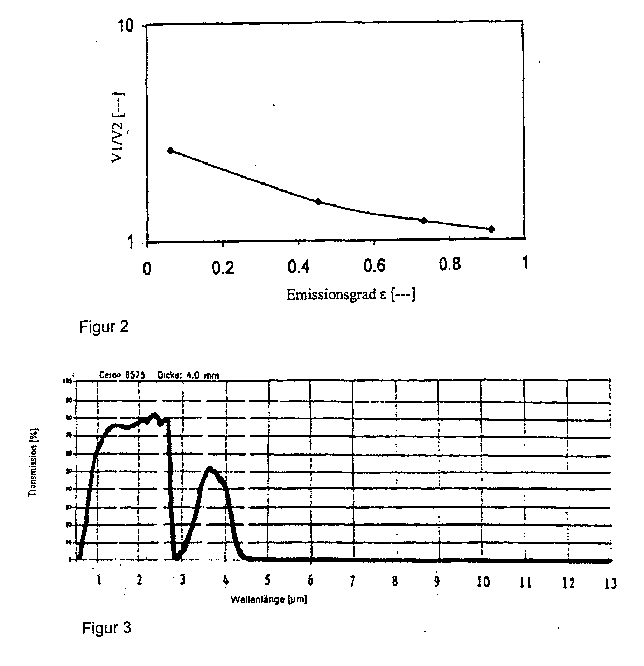

Zur Messung der Wärmestrahlungsintensitäten sind die beiden Mess-Stellen (16, 26) mit Infrarot-Leitungen (3, 13) verbunden, welche die Wärmestrahlung über infrarot-durchlässige Filter (17, 18) zu Infrarot-Detektoren (4, 14) führen. Als Infrarot-Leitungen (3, 13) werden in der Regel Röhren verwendet, welche im Inneren durch eine Goldbeschichtung im infraroten Wellenbereich einen Reflexionsgrad nahe eins erreichen. Als Infrarot-Detektoren (4, 14) können an sich bekannte Thermopiles verwendet werden. Die Infrarot-Detektoren (4, 14) messen die Wärmestrahlungsintensitäten und erzeugen über Verstärker (15, 21) elektrische Ausgangs-Signale (V1, V2), welche zu den Wärmestrahlungsintensitäten des heißen Körpers (1a) proportional sind. Die Ausgangs-Signale (V1, V2) werden einer Auswerteeinrichtung (12) zugeführt. Sie beinhaltet eine Referenztabelle. In ihr sind dem Verhältnis der beiden Signale V1/V2 Werte für den Emissionsgrad der Garbehälter-Bodenfläche zugeordnet. Natürlich kann eine solche Zuordnung auch durch eine mathematische Funktion erreicht werden. Die Abhängigkeit des Emissionsrades von den Ausgangs-Signalen verdeutlich Fig. 2. Das in ihr dargestellte Diagramm zeigt anhand von experimentellen Messungen wie mit zunehmendem Verhältnis der Signale V1/V2 der Emissionsgrad der Garbehälter-Bodenfläche abnimmt. Weiter ist in der Auswerteeinrichtung (12) ein Programm hinterlegt, mit dem abhängig vom Signal V2 und vom Emissionsgrad die Temperatur der Garbehälter-Bodenfläche berechenbar ist. Im Ausführungsbeispiel weist die Auswerteeinrichtung (12) einen nicht dargestellten ASIC-Chip auf, der die eingehenden Signale (V1) und (V2) zunächst digitalisiert, dann dass Verhältnis der beiden Werte V1/V2 bildet und mittels der Referenztabelle den Emissionsgrad von der Garbehälter-Bodenfläche bestimmt. Anschließend setzt er den Signal-Wert V2 und den Emissionsgrad in das hinterlegte Programm ein, welches mit Hilfe des Planck'schen Strahlungsgesetzes die Temperatur der Garbehälter-Bodenfläche berechnet.

Ein Teil der Wärmestrahlung die von den Heizwendeln (19) durch die Kochfeldplatte (9) gesendet wird, wird von der Garbehälter-Bodenfläche reflektiert und gelangt so über das Fenster (2) zu den Mess-Stellen (16, 26) der Messanordnung. Dabei erhöht die reflektierte Strahlung jedoch nicht die Temperatur des Garbehälters (8). Damit diese reflektierte Wärmestrahlung die vorbeschriebene Temperaturmessung nicht beeinflusst, sind speziell ausgestattete Infrarot-Detektoren (4, 14) eingesetzt worden. Sie reagieren in einem Wellenlängenbereich auf Wärmestrahlung, in dem die Kochfeldplatte (9) der Kochzone für Wärmestrahlen undurchlässig ist. Hierzu zeigt Fig. 3 eine experimentelle Messkurve für ein hier als Kochfeldplatte (9) verwendetes 4mm dickes Ceran-Feld. Es ist für die Wärmestrahlung eines Wellenlängen-Bereichs von ca. 4,5µm bis 13µm undurchlässig.

Da mit Erwärmung eines Körpers (1a) die Intensität seiner aussendenden Wärmestrahlen steigt, müssen der Körper (1a) und die Infrarot-Leitungen (3, 13) vor einer Erwärmung geschützt werden. Denn bei Erwärmung des Körpers (1a) und/oder der Infrarot-Leitungen (3, 13) senden sie Wärmestrahlen aus, welche mit denen von der Garbehälter-Bodenfläche ausgesendeten in Wechselwirkung stehen. Dadurch würde die Genauigkeit der zu berechnenden Temperatur-Werte beeinträchtigt.

Zur Minimierung der Erwärmung ist ein Schutzschild (6, 7), vorzugsweise aus einer Keramik, vorgesehen. Das Schutzschild soll die Wärmestrahlung der Heizwendel (19) möglichst komplett reflektieren. Es kann geometrisch in einen oberen (7) und einen unteren Bereich (6) aufgeteilt werden. Sein oberer Bereich (7) hat die Kontur eines abgeschnittenen Ellipsoids. Es ist hohl ausgebildet und umgibt den Körper (1a) und einen oberen Teil der Infrarot-Leitungen (3, 13). Sein anschließender unterer Bereich (6) ist rohrförmig ausgebildet und ummantelt die beiden Infrarot-Leitungen (3, 13) in ihren unteren Bereich. Eine metallische Wärmeleitung (5, 11) ist zentrisch zum keramischen Schutzschild (6, 7) angeordnet. Sie weist die gleiche Form wie das Schutzschild auf und besitzt mechanischen Kontakt zu dem Körper (1a) und den Infrarot-Leitungen (3, 13), um deren Wärme zu einer nachgeschalteten Wärmesenke (24) abzuleiten. Als Wärmesenke (24) sind Kühlrippen vorgesehen, die sich in einem kühlen Bereich entfernt von den Heizwendeln (19) befinden. Die vorgestellte Ausführung der Messanordnung wird also einerseits durch die Wärmereflektion über das Schutzschild (6, 7) und anderseits durch die Wärmeabfuhr durch die Wärmeleitung (5, 11) zur Wärmesenke (24) kühl gehalten.

Für den Fall, dass trotz der Vorkehrungen die Infrarot-Leitungen (3, 13) und/oder der Körper (1a) erwärmt werden, ist ein als Temperatursensor verwendetes Thermoelement (25) an dem Körper (1a), insbesondere nahe des Hohlraums (1b), zur Temperaturmessung angebracht. Es führt der Auswerteeinrichtung (12) ein elektrisches Signal Vp über ein nachgeschaltetes elektrisches Leiterpaar (27) zu. Sie korrigiert in Abhängigkeit des Signals Vp über eine Funktion oder einer Referenztabelle die Signale (V1, V2) und führt dann mit den neuen Werten (V1', V2') die bereits beschriebenen Berechnungen zur Temperaturbestimmung der Garbehälter-Bodenfläche durch.

Um die reflektierenden Flächen der Infrarot-Leitungen (3, 13) und des Hohlraums (1b) gegenüber der vom Garbehälter-Bodenfläche emittierten Wärmestrahlung zu schützen, sind die Infrarot-Leitungen (3, 13) und der Hohlraum (1b) mit einem chemisch inerten Gas wie Nitrogen oder Argon gefüllt und gasdicht verschlossen.

**Patentansprüche**

1. Messanordnung zur pyrometrischen Temperaturbestimmung eines Garbehälters, mit seiner Bodenfläche mit einer ebenen Kochfeldplatte auf der der Garbehälter in einer Kochzone aufliegt wobei dessen Wärmestrahlung mit einem Detektor sensiert wird,
   **dadurch gekennzeichnet,**
   **dass** die Kochfeldplatte (9) der Kochzone eine Öffnung (20) aufweist, in der ein infrarotdurchlässiges Fenster (2) eingelassen ist, und dass unterhalb des Fensters (2) ein Körper (1a) mit einer näherungsweise halbkugelförmigen Innenfläche angeordnet ist, der mit dem Fenster (2) einen zumindestens näherungsweise geschlossenen Hohlraum (1b) bildet, mit einer ersten im halbkugelförmigen unteren Bereich des Hohlraums (1b) positionierten infrarot-durchlässigen Mess-Stelle (16) und einer zweiten an der Unterseite des Fensters (2) angeordneten Mess-Stelle (26), wobei die Mess-Stellen (16, 26) jeweils an einem nachgeschalteten Infrarot-Detektor (4, 14) angekoppelt sind, der die eingegangene Wärmestrahlung in elektrische Ausgangs-Signale (V1,V2) umwandelt und einer Auswerteeinrichtung (12) zuführt, welche in Abhängigkeit des Verhältnisses der beiden elektrischen Ausgangs-Signale (V1,V2) den Emissionsgrad der Garbehälter-Bodenfläche ermittelt und aus dem Emissionsgrad und einem der elektrischen Ausgangs-Signale (V1, V2) die Temperatur der Garbehälter-Bodenfläche berechnet.

2. Messanordnung nach Anspruch 1,
   **dadurch gekennzeichnet,**
   **dass** die zweite Mess-Stelle (26) auf der Unterseite des Fensters (2) innerhalb oder außerhalb des Hohlraumes (1b) angeordnet ist.

3. Messanordnung nach Anspruch 2,
   **dadurch gekennzeichnet,**
   **dass** die näherungsweise halbkugelförmige Innenfläche des Körpers (1a) infrarot- reflektierend ist.

4. Messanordnung nach Anspruch 3,
   **dadurch gekennzeichnet,**
   **dass** das Fenster (2) über einen Passring (23) in die Öffnung (20) der Kochfeldplatte (9) zentrisch zur Kochzone eingelassen ist, wobei das Fenster (2) aus Sapphir oder Zinksulfat gefertigt ist.

5. Messanordnung nach Anspruch 4,
   **dadurch gekennzeichnet**,
   das zwischen den Mess-Stellen (16, 26) und den Infrarot-Detektoren (4, 14) Infrarot-Leitungen geschaltet sind.

6. Messanordnung nach Anspruch 5,
   **dadurch gekennzeichnet,**
   **dass** ein infrarot-reflektierendes Schutzschild (6, 7), insbesondere aus Keramik, den Körper (1a) und zumindestetens teilweise die Infrarot-Leitungen (3, 13) umgibt.

7. Messanordnung nach Anspruch 6,
   **dadurch gekennzeichnet,**
   **dass** eine Wärmeleitung (5, 11), insbesondere aus Metall, innerhalb des infrarot-reflektierenden Schutzschildes (6, 7) angeordnet ist, welche die Wärme der Infrarot-Leitungen (3, 13) und des Körpers (1a) zu einer Wärmesenke (24) leitet.

**8.** Messanordnung nach mindestens einem der Ansprüche 1 bis 7,
**dadurch gekennzeichnet,**
**dass** die beiden Infrarot-Leitungen (3, 13) rohrförmig ausgebildet sind und ihre Innenflächen infrarot-reflektierend sind.

**9.** Messanordnung nach mindestens einem der Ansprüche 1 bis 8,
**dadurch gekennzeichnet,**
**dass** die infrarot-reflektierende Innenfläche des Körpers (1a) und der Infrarot-Leitung (3, 13) goldbeschichtet sind.

**10.** Messanordnung nach mindestens einem der Ansprüche 1 bis 9,
**dadurch gekennzeichnet,**
**dass** mindestens eine der beiden Infrarot-Leitungen (3, 13) und/oder der Hohlraum (1b) mit einem chemisch inerten Gas gefüllt sind.

**11.** Messanordnung nach mindestens einem der Ansprüche 1 bis 10,
**dadurch gekennzeichnet,**
**dass** das Kochfeld als Ceran-Feld ausgebildet ist, welches einen für Wärmestrahlung undurchlässigen Bereich von ca. 4,5μm bis 13μm aufweist.

**12.** Messanordnung nach Anspruch 11,
**dadurch gekennzeichnet,**
**dass** mindestens einer der beiden Infrarot-Detektoren (4, 14) nur bei Wärmestrahlungen, die im Bereich von ca. 4,5 bis 13μm liegen, elektrische Ausgangs-Signale (V1, V2) sendet.

**13.** Messanordnung nach mindestens einem der Ansprüche 1 bis 12,
**dadurch gekennzeichnet,**
**dass** ein erstes Infrarot-Filter (18) dem ersten Infrarot-Detektor (4) und/oder ein zweites Infrarot-Filter (17) dem zweiten Infrarot-Detektor (14) vorgeschaltet ist, wobei das jeweilige Filter (17, 18) nur für eine Wärmestrahlung durchlässig ist, die in einem Wellenbereich von ca. 4,5 bis 13μm liegt.

**14.** Messanordnung nach mindestens einem der Ansprüche 1 bis 13,
**dadurch gekennzeichnet,**
**dass** die Auswerteeinrichtung (12) zur Berechnung der Temperatur der Garbehälter-Bodenfläche einen Mikrocontroller und/oder einen ASIC-Chip beinhaltet.

**15.** Messanordnung nach mindestens einem der Ansprüche 1 bis 14,
**dadurch gekennzeichnet,**
**dass** ein Temperatursensor (25) an dem Körper (1a) zur Ermittlung der Temperatur im Hohlraum (1b) angebracht ist, welches ein elektrisches Signal Vp über ein nachgeschaltetes Leiterpaar (27) der Auswerteeinrichtung (12) zuführt, welche in Abhängigkeit des Signals Vp über eine Funktion oder einer Referenztabelle die Signale (V1, V2) korrigiert.


**Claims**

**1.** Measuring apparatus for pyrometrically determining the temperature of a cooking container, said apparatus having a flat cooking plate, on which the cooking container rests with its bottom surface in a cooking area, the heat radiation of said container being sensed by a detector, **characterised in that** the cooking plate (9) of the cooking area has an opening (20), in which an infrared-permeable window (2) is provided, and **in that** a body (1a) is disposed beneath the window (2), said body having an approximately hemispherical internal surface and forming, with the window (2), an at least approximately closed cavity (1b), a first infrared-permeable measuring location (16), which is positioned in the hemispherical lower region of the cavity (1b), and a second measuring.location (26), which is disposed on the underside of the window (2), the measuring locations (16, 26) each being connected to a respective subsequent infrared detector (4, 14), which converts the input heat radiation into electrical output signals (V1, V2) and supplies said signals to an evaluating device (12), which determines the degree of emission from the bottom surface of the cooking container in dependence on the ratio between the two electrical output signals (V1, V2) and calculates the temperature of the bottom surface of the cooking container from the degree of emission and from one of the electrical output signals (V1, V2).

**2.** Measuring apparatus according to claim 1, **characterised in** tnat the second measuring location (26) is disposed on the underside of the window (2) internally or externally of the cavity (1 b).

**3.** Measuring apparatus according to claim 2, **characterised in that** the approximately hemispherical internal surface of the body (1a) is infrared-reflective.

**4.** Measuring apparatus according to claim 3, **characterised in that** the window (2) is provided in the opening (20) of the cooking plate (9), centrally relative to the cooking area, via an adjustable ring (23), the window (2) being produced from sapphire or zinc sulphate.

**5.** Measuring apparatus according to claim 4, **characterised in that** infrared lines are connected between the measuring locations (16, 26) and the infrared detectors (4, 14).

**6.** Measuring apparatus according to claim 5, **characterised in that** an infrared-reflective protective shield (6, 7), more especially formed from ceramic material, surrounds the body (1a) and at least partially the infrared lines (3, 13).

**7.** Measuring apparatus according to claim 6, **characterised in that** a heat-conducting line (5,11), more especially formed from metal, is disposed internally of the infrared-reflective protective shield (6, 7), which line conducts the heat of the infrared lines (3, 13) and of the body (1a) to a heat sink (24).

**8.** Measuring apparatus according to at least one of claims 1 to 7, **characterised in that** the two infrared lines (3, 13) have a tubular configuration, and their internal surfaces are infrared-reflective.

**9.** Measuring apparatus according to at least one of claims 1 to 8, **characterised in that** the infrared-reflective internal surfaces of the body (1a) and of the infrared line (3, 13) are coated with gold.

**10.** Measuring apparatus according to at least one of claims 1 to 9, **characterised in that** at least one of the two infrared lines (3, 13) and/or the cavity (1V) are/is filled with a chemically inert gas.

**11.** Measuring apparatus according to at least one of claims 1 to 10, **characterised in that** the cooking area is in the form of a ceran field, which has a region of approx. 4.5 μm to 13 μm impermeable to heat radiation.

**12.** Measuring apparatus according to claim 11, **characterised in that** at least one of the two infrared detectors (4, 14) transmits electrical output signals (V1, V2) only in the case of heat radiations which lie within the range of approx. 4.5 to 13 μm.

**13.** Measuring apparatus according to at least one of claims 1 to 12, **characterised in that** a first infrared filter (18) is connected upstream of the first infrared detector (4) and/or a second infrared filter (17) is connected upstream of the second infrared detector (14), the respective filter (17, 18) only being permeable to a heat radiation which lies within a wave range of approx. 4.5 to 13 μm.

**14.** Measuring apparatus according to at least one of claims 1 to 13, **characterised in that** the evaluating device (12) includes a microcontroller and/or an ASIC chip in order to calculate the temperature of the bottom surface of the cooking container.

**15.** Measuring apparatus according to at least one of claims 1 to 14, **characterised in that** a temperature sensor (25) is attached to the body (1a) to determine the temperature in the cavity (1V), which sensor supplies an electrical signal Vp to the evaluating device (12) via a subsequent pair of conductors (27), which device corrects the signals (V1, V2) in dependence on the signal Vp via a function or a reference table.


**Revendications**

**1.** Dispositif de mesure pour la détermination pyrométrique de température d'un récipient de cuisson comportant une plaque chauffante plane sur laquelle le réservoir de cuisson repose par son fond dans une zone de cuisson, dont le rayonnement thermique est capté par un détecteur,
**caractérisé par le fait**

**que** la plaque chauffante (9) de la zone de cuisson présente une ouverture (20) dans laquelle est encastrée une fenêtre (2) perméable aux rayons infrarouges et que sous la fenêtre (2) est disposé un corps (1a) ayant une surface intérieure approximativement hémisphérique qui forme avec la fenêtre (2) une cavité (1b) au minimum approximativement fermée, avec un premier point de mesure (16) perméable aux rayons infrarouges, situé dans la partie inférieure hémisphérique de la cavité (1b) et un deuxième point de mesure (26) situé sur la face inférieure de la fenêtre (2), les points de mesure (16, 26) étant couplés respectivement à des détecteurs de rayons infrarouges (4, 14) placés en aval qui convertissent le rayonnement thermique reçu en signaux électriques de sortie (V1, V2) qui sont amenés à une unité d'évaluation (12), laquelle détermine en fonction du rapport des deux signaux électriques de sortie (V1, V2) le degré d'émission du fond du récipient de cuisson et calcule, à partir du degré d'émission et d'un des signaux électriques de sortie (V1, V2), la température du fond du récipient de cuisson.

2. Dispositif de mesure selon la revendication 1,
   **caractérisé par le fait**
   **que** le deuxième point de mesure (26) est situé sur la face inférieure de la fenêtre (2) à l'intérieur ou à l'extérieur de la cavité (1b).

3. Dispositif de mesure selon la revendication 2,
   **caractérisé par le fait**
   **que** la surface intérieure approximativement hémisphérique du corps (1a) est réfléchissante de rayons infrarouges.

4. Dispositif de mesure selon la revendication 3,
   **caractérisé par le fait**
   **que** la fenêtre (2) est encastrée au moyen d'une bague d'ajustage (23) dans l'ouverture (20) de la plaque chauffante (9) de façon centrée par rapport à la zone de cuisson, la fenêtre (2) étant réalisée en saphir ou en sulfate de zinc.

5. Dispositif de mesure selon la revendication 4,
   **caractérisé par le fait**
   **que** des lignes à rayons infrarouges sont connectées entre les points de mesure (16, 26) et les détecteurs de rayons infrarouges (4, 14).

6. Dispositif de mesure selon la revendication 5,
   **caractérisé par le fait**
   **qu'**un écran protecteur réfléchissant les rayons infrarouges (6, 7), en particulier en céramique, entoure le corps (1a) et au moins partiellement les lignes à rayons infrarouges (3, 13).

7. Dispositif de mesure selon la revendication 6,
   **caractérisé par le fait**
   **qu'**un conducteur thermique (5, 11), en particulier en métal, est disposé à l'intérieur de l'écran protecteur réfléchissant les rayons infrarouges (6, 7) pour conduire la chaleur des lignes à rayons infrarouges (3, 13) et du corps (1a) vers un dissipateur thermique (24).

8. Dispositif de mesure selon au moins une des revendications 1 à 7,
   **caractérisé par le fait**
   **que** les deux lignes à rayons infrarouges (3, 13) sont réalisées sous forme tubulaire et que leurs surfaces intérieures sont réfléchissantes de rayons infrarouges.

9. Dispositif de mesure selon au moins une des revendications 1 à 8,
   **caractérisé par le fait**
   **que** la surface intérieure réfléchissant les rayons infrarouges du corps (1a) et des lignes à rayons infrarouges (3, 13) est revêtue d'or.

10. Dispositif de mesure selon au moins une des revendications 1 à 9,
    **caractérisé par le fait**
    **qu'**au moins une des deux lignes à rayons infrarouges (3, 13) et/ou la cavité (1b) sont remplies d'un gaz chimiquement inerte.

11. Dispositif de mesure selon au moins une des revendications 1 à 10,
    **caractérisé par le fait**

**que** la plaque chauffante est une plaque Ceran qui présente une zone imperméable au rayonnement thermique compris entre environ 4,5 µm et 13 µm.

12. Dispositif de mesure selon la revendication 11,
**caractérisé par le fait**
**qu'**au moins un des deux détecteurs de rayons infrarouges (4, 14) n'envoie de signaux électriques de sortie (V1, V2) que dans le cas de rayonnements thermiques compris entre environ 4,5 µm et 13 µm.

13. Dispositif de mesure selon au moins une des revendications 1 à 12,
**caractérisé par le fait**
**qu'**un premier filtre à rayons infrarouges (18) est placé en amont du premier détecteur de rayons infrarouges (4) et/ou qu'un deuxième filtre à rayons infrarouges (17) est placé en amont du deuxième détecteur de rayons infrarouges (14), le filtre respectif (17, 18) n'étant perméable qu'à un rayonnement thermique dont la gamme d'ondes est comprise entre environ 4,5 µm et 13 µm.

14. Dispositif de mesure selon au moins une des revendications 1 à 13,
**caractérisé par le fait**
**que** le dispositif d'évaluation (12) de calcul de la température du fond du récipient de cuisson contient un microcontrôleur et/ou un circuit ASIC.

15. Dispositif de mesure selon au moins une des revendications 1 à 14,
**caractérisé par le fait**
**qu'**une sonde de température (25) est placée sur le corps (1a) pour déterminer la température dans la cavité (1b), laquelle sonde délivre, par une paire de conducteurs (27), placée en aval, un signal électrique $V_P$ au dispositif d'évaluation (12) qui corrige les signaux (V1, V2) en fonction du signal $V_P$ par le biais d'une fonction ou d'une table de référence.

Figur 1A

Figur 1B

Figur 2

Figur 3